Europäisches Patentamt

European Patent Office

Office européen des brevets

(19)

(11) Publication number: **0 299 544 B1**

## EUROPEAN PATENT SPECIFICATION

(12)

(45) Date of publication of patent specification: **16.09.92**  (51) Int. Cl.5: **D06B 9/06**

(21) Application number: **88201092.9**

(22) Date of filing: **31.05.88**

(54) **Process for the continuous washing with solvent of woollen fabrics and relevant equipment.**

(30) Priority: **07.07.87 IT 2120287**

(43) Date of publication of application:
**18.01.89 Bulletin 89/03**

(45) Publication of the grant of the patent:
**16.09.92 Bulletin 92/38**

(84) Designated Contracting States:
**CH DE ES FR GB LI**

(56) References cited:
**DE-A- 2 051 043**
**DE-A- 3 229 194**
**FR-A- 1 040 150**

(73) Proprietor: **SPEROTTO RIMAR S.p.A.**
**Via Roma 4**
**I-36016 Thiene Vicenza(IT)**

(72) Inventor: **Dalla Vecchia, Gino**
**Via Murello 65**
**I-36014 Santorso Vicenza(IT)**

(74) Representative: **De Carli, Erberto et al**
**ING. BARZANO' & ZANARDO MILANO S.p.A.**
**Via Borgonuovo, 10**
**I-20121 Milano(IT)**

EP 0 299 544 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a process for the continuous washing with solvent of woollen fabrics coming from a milling machine, and to the relevant equipment.

The operation of milling of woollen fabrics, carried out on suitable equipment of batchwise type by means of water baths containing specific surfactant products, must be followed by a washing operation aiming at removing from the treated fabrics the residues of such milling assistant surfactant products, as well as the fatty substances originally present on the fabric, which have been emulsified by the surfactant action of these products. The washing operation, whether is carried out on the same milling equipment, or is carried out on other machines of either continuous or batchwise type, requires the consumption of very large amounts of water, and produces a same amount of waste water to be purified.

The effect of washing does not always result fully satisfactory, because it does not succeed in completely removing and eliminating the residual presence of stains and deposits of fatty and oily substances by means of the aqueous vehicle used.

Finally, the fabric anyway requires a subsequent drying operation, to be carried out on a separate equipment, before being sent to the end finishing cycle.

DE-A-3 229 194 discloses a washing process for a moist fabric, for instance for impurities-impregnated natural fibres, comprising the operations indicated in the preamble of claim 1, and an equipment for the continuous washing with solvent composed by the elements indicated in the preamble of claim 2.

This known process and the relevant equipment are not specifically applied to the washing of a woollen fabric coming from a milling machine and containing residues of milling assistant products and of emulsified fatty substances. To collect the washing product a single tank is provided, in which a single separation operation is carried out. The solvent to be recycled to the spraying elements is sucked from an intermediate zone and from the bottom of the collecting tank, while by means of a surface drainpipe the foreign substances are sent to a distiller for purification and recovery of solvent. Thus, the effective separation of the components forming the washing product takes place during and after the distillation, with the detergents and emulsifying agents collected in the bottom part of the distiller and the mixture of water and solvent to be separated from each other downstream of the distillation operation. The solvent and the water are to be distilled together with consequent high energy consumption and as detergents and emulsifying agents are treated together with the solvent, there is a risk of inquination of the solvent.

The purpose of the present invention is to provide a continuous process, and an equipment capable of carrying out such a process, for washing with solvent of woollen fabrics coming from a milling machine, which makes it possible the above said drawbacks to be overcome, by minimizing the consumptions, and using in the best way the operation of washing and cleaning, so as to obtain a good-quality fabric.

These and still further purposes are achieved by providing a process according to the characterizing portion of claim 1 and an equipment according to the characterizing portion of claim 2.

The characteristics and the advantages of a process and of an equipment according to the present invention will be better understood from the following dislosure, relating to the hereto attached schematic drawing, which shows an elevation view of a continuous washing equipment.

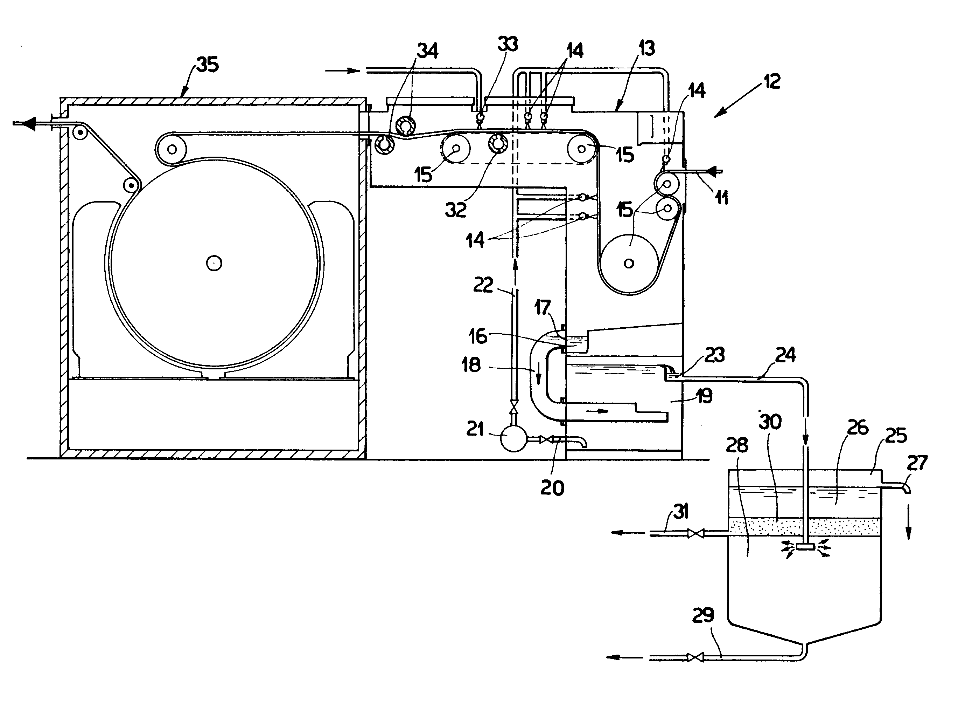

Referring to the figure, a process for the continuous washing with solvent of a woollen fabric 11 according to the present invention is carried out in an equipment, generally indicated by the reference numeral 12. The woollen fabric is continuous, milled, moist, preliminarily water-extracted and still containing the residues of the milling assistant products, and of the fatty substances emulsified with them.

In an equipment 12 there are essentially provided a washing unit 13 and a drying unit 35, installed in series to each other, in order to receive said continuous fabric. The washing unit 13 is equipped with a set of shower-like spraying elements 14 for spraying a solvent, of the type of high-pressure nozzles, positioned on both sides of tie running woollen fabric 11. Such spraying elements 14 are so positioned as to cause the physical-mechanical displacement of water, surfactant products and impurities of oily nature present in said fabric 11. Inside said washing unit 13, the fabric 11 runs according to a predetermined trajectory, guided by a set of rolls 15 and both sides thereof are struck by the solvent sprayed by said spraying elements 14 respectively installed in the nearby of the entry, in a central area and close to the exit of said washing unit 13.

Such a solvent washing causes a bath of washing liquid to be formed, which is indicated by the reference numeral 16, on the bottom of said washing unit 13, which is composed by a mixture of solvent, water and semi-emulsified foreign substances. Said liquid bath 16 exiting through a bottom opening 17 provided in the washing unit 13 by means of a relevant duct 18 is fed to the interior of a first tank 19, acting as a pre-separation unit, on whose bottom a pipe 20 is provided as the solvent separating means, acting as the intake pipe for a pump 21 which delivers, as the feeding means, the recovered solvent through a delivery pipe 22 connected with said set of spraying elements 14.

A second opening 23, provided near the top of said pre-separation tank 19 is connected by means of a further pipe 24 to a second decantation tank 25, installed in series to the first tank.

The residues of the liquid washing bath 16 coming to the second decantation tank 25 arrange themselves in a stratified pattern, according to layers well separated from each other. In fact, as the upper layer an aqueous phase 26 is formed, which can be discharged by means of a surface drain pipe 27. As the bottom layer a heavier solvent phase 28 precipitates, which is intaken from the bottom of said second tank 25 by means of a pipe 29 connected with a primary distiller (not displayed in the figure). As the intermediate layer, semi-emulsified surfactant components, indicated by the reference numeral 30, accumulate between the top aqueous phase 26 and the underlying solvent phase 28, and are sent, through a further pipe 31, to a secondary distiller (not shown in the figure).

Such a sharp separation of the above said three phases which compose the liquid washing bath 16 is determined by the relative immiscibility of said phases with one another, and due to the difference in their specific gravities, so that the discharge is made possible of an aqueous phase 26 with a low polluting contents, and whose amount is anyway very small, because it only derives from water originally present in the moist fabric 11 entering the equipment 12.

It should be furthermore observed that both the solvent phase 28 and the layer composed by the surfactant components 30 in no way are released into the environment, but they are treated in the secondary distillation unit (not shown) of the facility, which purifies and recovers the solvent, which can be therefore continuously recycled. The disposal of the surfactant products, of the fatty substances and of all the other impurities extracted from the fabric 11 takes place in said secondary distillation unit, e.g., by means of the extraction of concentrated sludges.

Nearly in the nearby of the end portion of said washing unit 13, after that the fabric has travelled above a first tubular sucking element 32, a further spraying element 33 is positioned which, by being fed with clean solvent, performs an end rinsing of the same fabric 11. Subsequently, at least a second tubular sucking element 34, in the depicted example two elements opposite to each other on opposite fabric sides, partially dries the same fabric 11 before this latter is fed to the drying unit 35, such as a chamber associated with said washing unit 13, and constituting, together with it, the equipment which makes it possible a process according to the present invention to be practiced.

The end drying of the fabric 11, carried out in the above said drying chamber 35, thanks to the physical characteristics of the solvent means, is carried out with a considerably reduced energy consumption, as compared to the traditional drying of the aqueous means, therefore resulting mare advantageous from a financial paint of view.

The effect of washing and cleaning of the fabric obtained by means of a process or an equipment according to the present invention reach high quality standards thanks to the complete and uniform removal of stains and deposits of fatty and oily substances. Advantageously, the application of a continuous washing with solvent to the woollen fabrics, or to similar types of fabrics coming from milling, makes it hence possible most drawbacks deriving from the traditional washing techniques in an aqueous medium to be overcome both under a quality standpoint, and an economic standpoint.

## Claims

1. Process for the continuous washing with solvent of a woollen fabric coming from a milling machine, comprising the operations of:
   - feeding to a washing step said woollen fabric just milled, moist, and containing residues of milling assistant products and of emulsified fatty substances;
   - washing said fabric in continuous with a solvent on both sides thereof;
   - collecting the washing product and separating the solvent, so as to be able to recycle the same solvent in a pure enough state for the above said washing operation;
   - end rinsing said fabric with clean solvent; and
   - drying said fabric containing said solvent; characterized in that the collected washing product is subjected to
   - a first rough preliminary seperation operation to recover said solvent in a pure enough state, and in that
   - the residues of the washing product obtained in said first preliminary separation operation are subjected to a second separation operation carried out by decantation to obtain three sharp separated layers, of which the upper layer composed by an aqueous phase is discharged, the bottom layer composed by a solvent phase is sent to a primary distillation operation and the intermediate layer composed by semi-emulsified surfactant components is sent to a secondary distillation operation.

2. Equipment for the continuous washing with solvent according to the process of claim 1, composed by a washing unit (13) and a drying unit (35), installed in series, to which a milled, moist, woollen fabric (11) is fed, with said washing unit (13) comprising a set of solvent spraying elements (14) to spray a solvent on both sides of said fabric (11) and at least one further spraying element (33) fed with clean solvent and positioned downstream of said set of spraying elements (14) and at the entrance of said drying unit (35), at least one collecting tank (19) inside which the washing product (16) is collected, with said tank (19) being equipped with at least one solvent separation means (20) and with means (21), for feeding said separated recovered solvent to said set of spraying elements (14), characterized in that said at least one collecting tank comprises a first tank (19) of rough preliminary separation and a second tank (25) of decantation, installed in series to each other, wherein said first tank (19) is equipped with said means (20,21) of separation and fed to said set of spraying elements (14) and said second tank (25) is equipped with a surface drainpipe (27) for discharging of an aqueous phase, with a bottom discharge pipe (29) connected with a primary distiller and with an intermediate discharge pipe (31) connected with a secondary distiller.

3. Equipment according to claim 2, characterized in that both upstream and downstream said at least one further spraying element (33) tubular sucking elements (32, 34) are provided.

**Patentansprüche**

1. Verfahren zum kontinuierlichen Reinigen eines Wollgewebes, das von einer Walkmaschine kommt, umfassend die folgenden Schritte:
   - Zuführen des gerade gewalkten, feuchten und Rückstände von das Walken unterstützenden Mitteln und von emulgierten fettigen Substanzen enthaltenden Wollgewebes zu einem Waschschritt;
   - kontinuierliches Waschen des Gewebes an dessen beiden Seiten mit einem Lösungsmittel;
   - Sammeln des Waschproduktes und Trennen des Lösungsmittels, so daß das gleiche Lösungsmittel in einem ausreichend reinen Zustand für den obigen Waschschritt rückgeführt werden kann;
   - Endspülen des Gewebes mit sauberem Lösungsmittel;
   - Trocknen des Lösungsmittel enthaltenden Gewebes;
   dadurch **gekennzeichnet,** daß
   das gesammelte Waschprodukt
   - einem ersten, rohen, vorläufigen Trennvorgang unterworfen wird, um das Lösungsmittel in einem ausreichend reinen Zustand rückzugewinnen, und daß
   - die Rückstände des in dem ersten vorläufigen Trennvorgang erhaltenen Waschproduktes einem zweiten Trennvorgang unterworfen werden, der durch Dekantieren durchgeführt wird, um drei scharf getrennte Schichten zu erhalten, von denen die obere, aus einer wässerigen Phase zusammengesetzte Schicht abgelassen wird, die untere Schicht, die aus einer Lösungsmittelphase besteht, einem ersten Destillationsvorgang zugeführt wird und die mittlere Schicht, die aus semi-emulgierten Tensiden besteht, einem zweiten Destillationsvorgang zugeführt wird.

2. Vorrichtung zum Durchführen von kontinuierlichem Reinigen gemäß Anspruch 1, umfassend eine Wascheinheit (13) und eine Trockeneinheit (35), die seriell hintereinander installiert sind, denen ein gewalktes, feuchtes Wollgewebe (11) zugeführt wird, wobei die Wascheinheit (13) einen Satz von Lösungsmittelsprühelementen (14) umfaßt, um ein Lösungsmittel auf beide Seiten des Gewebes (11) zu sprühen, sowie zumindest ein weiteres Sprühelement (33), dem sauberes Lösungsmittel zugeführt wird und das stromabwärts von dem Satz von Sprühelementen (14) und am Eingang der Trockeneinheit (35) angeordnet ist, zumindest einen Sammeltank (19), innerhalb von dem das Waschprodukt (16) gesammelt wird, wobei der Tank (19) mit mindestens einer Lösungsmitteltrenneinrichtung (20) und mit einer Einrichtung (21) zum Zuführen des getrennten, rückgewonnenen Lösungsmittels zu dem Satz von Sprühelementen (14) versehen ist,
   dadurch **gekennzeichnet,** daß
   der mindestens eine Sammeltank einen ersten Tank (19) für eine grobe, vorläufige Trennung und einen zweiten Dekantierungstank (25) umfaßt, die seriell hintereinander installiert sind, wobei der erste Tank (19) mit der Einrichtung (20, 21) zum Trennen und Zuführen zu dem Satz von Sprühelementen (14) ausgestattet ist, und daß der zweite Tank (25) mit einem Oberflächenabflußrohr (27) zum Ablassen einer wässerigen Phase ausgestattet ist, wobei ein Bodenabflußrohr (29) mit einem ersten Destillator und wobei ein Zwischenabflußrohr (31) mit einem zweiten Destillator verbunden sind.

3. Vorrichtung nach Anspruch 2, dadurch **gekennzeichnet,** daß sowohl stromaufwärts wie auch stromabwärts des mindestens einen weiteren Sprühelementes (33) rohrförmige Saugelemente (32, 34) vorgesehen sind.

**Revendications**

1. Procédé pour le lavage continu à l'aide d'un solvant d'une étoffe de laine provenant d'une machine à fouler, comprenant les opérations suivantes:
   - déplacement jusqu'à une unité de lavage de ladite étoffe de laine juste foulée, humide et contenant des résidus d'agents, utilisés pour le foulage, et de substances grasses émulsifiées;
   - lavage de ladite étoffe en continu à l'aide d'un solvant des deux côtés de cette dernière;
   - collecte du produit de lavage et séparation du solvant, afin de pouvoir recycler le même solvant dans un état suffisamment pur pour effectuer ladite opération de lavage sus-mentionnée;
   - rinçage final de ladite étoffe à l'aide d'un solvant propre; et
   - séchage de ladite étoffe contenant ledit solvant; caractérisé en ce que le produit de lavage collecté est soumis à:
   - une première opération de séparation préliminaire grossière pour récupérer ledit solvant dans un état suffisamment pur, et en ce que
   - les résidus du produit de lavage obtenu dans ladite première opération de séparation préliminaire sont soumis à une deuxième opération de séparation effectuée par décantation pour obtenir trois couches séparées distinctes, la couche supérieure composée d'une phase aqueuse étant évacuée, la couche inférieure composée d'une phase de solvant étant destinés a subir une opération de distillation primaire et la couche intermédiaire composée d'éléments formant agents de surface semi-émulsifiés étant destinés à subir une opération de distillation secondaire.

2. Matériel pour le lavage continu à l'aide de solvant selon le procédé de la revendication 1, composé d'une unité de lavage (13) et d'une unité de séchage (35), placées en série, auxquelles est transmise une étoffe de laine (11) foulée, humide, ladite unité de lavage (13) comprenant un ensemble d'éléments de pulvérisation de solvant (14) pour pulvériser un solvant des deux côtés de ladite étoffe (11) et au moins un autre élément de pulvérisation (33) alimenté en solvant propre et positionné en aval dudit ensemble d'éléments de pulvérisation (14) et à l'entrée de ladite unité de séchage (35), d'au moins un réservoir collecteur (19) à l'intérieur duquel le produit de lavage (16) est collecté, ledit réservoir (19) étant pourvu d'au moins un moyen de séparation du solvant (20) et de moyens (21) pour transmettre ledit solvant récupéré audit ensemble d'éléments de pulvérisation (14), caractérisé en ce qu'au moins ledit réservoir collecteur comprend un premier réservoir (19) de séparation préliminaire grossière, et un deuxième réservoir (25) de décantation, placés en série l'un par rapport à l'autre, dans lequel ledit premier réservoir (19) est pourvu desdits moyens (20, 21) de séparation et raccordé audit ensemble d'éléments de pulvérisation (14) et ledit deuxième réservoir (25) est pourvu d'un tuyau d'écoulement en surface (27) pour l'évacuation d'une phase aqueuse, un tuyau d'évacuation inférieur (29) relié à un distillateur primaire et un tuyau d'évacuation intermédiaire (31) relié à un deuxième distillateur.

3. Matériel selon la revendication 2, caractérisé en ce que tant en amont qu'en aval d'au moins un autre élément de pulvérisation (33) sont prévus des éléments tubulaires d'aspiration (32, 34).